# EUROPÄISCHE PATENTSCHRIFT

(11) **EP 3 332 249 B1**
(45) Veröffentlichungstag und Bekanntmachung des Hinweises auf die Patenterteilung: **05.05.2021**
(21) Anmeldenummer: 16750144.4
(22) Anmeldetag: 02.08.2016
(51) Int. Cl.: G01N 27/62, H01J 49/00, H01J 49/06

(54) **VERFAHREN ZUM BETREIBEN EINES IONENTORS, EINRICHTUNG MIT EINEM IONENTRANSPORTBEREICH SOWIE COMPUTERPROGRAMM**
METHOD FOR OPERATING AN ION GATE, DEVICE HAVING AN ION TRANSPORT REGION, AND COMPUTER PROGRAM
PROCÉDÉ POUR FAIRE FONCTIONNER UNE GRILLE IONIQUE, DISPOSITIF AYANT UNE ZONE DE TRANSPORT D'IONS ET PROGRAMME INFORMATIQUE

(30) Priorität: 05.08.2015 DE 102015112869
(43) Veröffentlichungstag der Anmeldung: 13.06.2018
(73) Patentinhaber: Gottfried Wilhelm Leibniz Universität Hannover, 30167 Hannover (DE)
(72) Erfinder: ZIMMERMANN, Stefan, 30938 Burgwedel (DE); KIRK, Ansgar, 30167 Hannover (DE)
(74) Vertreter: Gramm, Lins & Partner Patent- und Rechtsanwälte PartGmbB
(86) Internationale Anmeldenummer: PCT/EP2016/068424
(87) Internationale Veröffentlichungsnummer: WO 2017/021406

(56) Entgegenhaltungen:
- WO-A1-2015/091146
- GB-A- 2 464 605
- US-A1- 2003 141 446
- US-A1- 2008 179 515
- JENS LANGEJUERGEN ET AL: "High Kinetic Energy Ion Mobility Spectrometer: Quantitative Analysis of Gas Mixtures with Ion Mobility Spectrometry", ANALYTICAL CHEMISTRY, Bd. 86, Nr. 14, 17. Juni 2014 (2014-06-17) , Seiten 7023-7032, XP055305270, ISSN: 0003-2700, DOI: 10.1021/ac5011662

## Beschreibung

Die Erfindung betrifft ein Verfahren zum Betreiben eines lonentors gemäß dem Oberbegriff des Anspruchs 1. Die Erfindung betrifft ferner eine Einrichtung mit einem Ionentransportbereich und wenigstens einer Felderzeugungseinrichtung mit einem Ionentransportbereich und wenigstens einer Felderzeugungseinrichtung zum Bewegen der Ionen in einer vorgesehenen Driftrichtung in dem lonentransportbereich mittels eines elektrischen Felds, wobei der Ionentransportbereich ein lonentor mit wenigstens einer ersten, einer zweiten und einer dritten Elektrode aufweist, die in der vorgesehenen Driftrichtung der Ionen derart hintereinander angeordnet sind, dass in Driftrichtung die zweite Elektrode hinter der ersten Elektrode und die dritte Elektrode hinter der zweiten Elektrode angeordnet ist, wobei die Einrichtung ferner eine Steuereinrichtung zur Steuerung des lonentors aufweist, die zur Ausführung eines Verfahrens nach einem der vorhergehenden Ansprüche eingerichtet ist. Die Erfindung betrifft außerdem ein Computerprogramm zur Durchführung des Verfahrens.

Allgemein betrifft die Erfindung die Steuerung eines lonenstroms, der z.B. in einem Analysegerät wie einem lonenmobilitätsspektrometer getaktet zu steuern ist. Für die Beeinflussung des lonenstroms kann man ein sogenanntes lonentor einsetzen. In diesem Zusammenhang betrifft die Erfindung allgemein das Gebiet der lonenmobilitätsspektrometrie sowie der zugehörigen Geräte, d.h. von Ionenmobilitätsspektrometern und damit gebildeten Gasanalyseeinrichtungen.

Eine solche Gasanalyseeinrichtung mit einem lonenmobilitätsspektrometer ist in der WO 2015/091146 A1 beschrieben. Ein gattungsgemäßes Verfahren ist aus der US 2008/0179515 A1 bekannt.

lonenmobilitätsspektrometer sind Geräte zur schnellen und hochsensitiven Spurengasanalyse, die Stoffe anhand der Bewegung ihrer Ionen durch ein Neutralgas unter dem Einfluss eines elektrischen Feldes separieren und identifizieren. Eine gebräuchliche Ausführungsform stellt dabei das sogenannte Flugzeit-Ionenmobilitätsspektrometer dar, welches die Zeit misst, die Ionen benötigen, um eine definierte Strecke zurückzulegen. Es besteht aus vier Hauptkomponenten - einer lonenquelle, welche Ionen erzeugt, einem Ionentor, welches in periodischen Abständen ein lonenpaket passieren lässt, einer Driftstrecke, entlang welcher die Flugzeit gemessen wird sowie einem Detektor, welcher den auftreffenden lonenstrom aufzeichnet. Da sich Ionenpaketverbreiterungen zum Startzeitpunkt direkt in einer Streuung der beobachteten Flugzeit beziehungsweise in Ionenpaketverbreiterungen am Detektor niederschlagen und so die analytische Leistungsfähigkeit reduzieren, stellt ein schnelles lonentor eine wichtige Komponente eines jeden Flugzeit-Ionenmobilitätsspektrometers dar. Ein optimiertes Ionentor wäre somit für jedes dieser Geräte von großem Interesse. Das lonentor wird unter anderem auch als Gate oder Shutter bezeichnet, das Überführen von Ionen aus der lonenquelle in die Driftstrecke auch als Injektion.

Das in der WO 2015/091146 A1 beschriebene lonentor mit der Anordnung aus drei hintereinanderliegenden Elektroden weist bereits viele Vorteile auf, insbesondere kann durch die Drei-Elektroden-Struktur eine Verzerrung des von der Felderzeugungseinrichtung zum Transport der Ionen erzeugten Felds minimiert werden. Allerdings führt die dort beschriebene Vorgehensweise zum Betreiben des lonentors zu einer Diskriminierung langsamer Ionenspezies, d.h. solche langsamen Ionen werden von der Analyse ausgeschlossen, da sie häufig nicht in der erforderlichen Zeit das lonentor passieren können.

Der Erfindung liegt die Aufgabe zugrunde, ein Verfahren zum Betreiben eines lonentors der zuvor beschriebenen Art anzugeben, bei dem eine Diskriminierung langsamer Ionen minimiert ist. Ferner soll eine entsprechende Einrichtung sowie ein Computerprogramm dafür angegeben werden.

Diese Aufgabe wird durch ein Verfahren gemäß Anspruch 1 gelöst.

Die Erfindung vereinigt dabei folgende Vorteile:
- Es findet keine bzw. zumindest keine praxisrelevante Diskriminierung bestimmter Ionenspezies mehr statt. Auch langsame Ionen können in den gewünschten Schaltzyklen des lonentors das lonentor passieren und somit für die Analyse genutzt werden.
- Durch das lonentor wird der gewünschte Feldverlauf innerhalb des lonentransportbereichs, d.h. des Bereichs, den die Ionen durch Drift zurücklegen sollen, nicht verzerrt.
- Das lonentor ist mechanisch einfach aufgebaut und dementsprechend einfach und kostengünstig zu fertigen. Das lonentor kann mit vergleichsweise geringen elektrischen Spannungen betrieben werden, ohne dass damit eine Einschränkung der Auswahl der nutzbaren Ionisationsquellen einhergeht.

Dies wird durch das Einführen eines zusätzlichen Schaltzustands des lonentors realisiert, nämlich der zwei unterschiedlichen geschlossenen Zustände. Durch Anlegen der ersten Potentialdifferenz zwischen der zweiten und der dritten Elektrode wird das lonentor nur einseitig geschlossen, nämlich hinsichtlich einer zwischen der zweiten und der dritten Elektrode gebildeten hinteren Kammer. In diesem Zustand können die Ionen eine vor der hinteren Kammer gebildete vordere Kammer zwischen der ersten und der zweiten Elektrode noch passieren. Dementsprechend stehen die Ionen direkt an der mittleren zweiten Elektrode zur Verfügung. Wird nun in den geöffneten Zustand geschaltet, erfolgt der Beginn der Injektion der Ionen in den weiteren Ionentransportbereich ohne Verzögerung oder Diskriminierung. Durch darauffolgendes Schalten in den zweiten geschlossenen Zustand kann das lonentor hinsichtlich der vorderen Kammer, d.h. zwischen der ersten und der zweiten Elektrode, geschlossen werden. Die Ionen, auch die langsameren Ionen, haben dann aber bereits die zweite Elektrode passiert und befinden sich in einem Bereich, in dem sie nicht mehr vom geschlossenen Zustand des lonentors beeinflusst werden.

Die fortlaufende Driftbewegung der Ionen durch das lonentor sowie die angrenzenden Bereiche des Ionentransportbereichs einer entsprechenden Einrichtung wird auch als lonenstrom bezeichnet. Das Schließen des Ionentors, d.h. das Einstellen des ersten geschlossenen Zustands oder des zweiten geschlossenen Zustands, wird durch Erzeugen einer den lonenstrom sperrenden Potentialdifferenz an den jeweils beteiligten Elektroden, d.h. einerseits der zweiten und der dritten Elektrode und andererseits der ersten und der zweiten Elektrode, realisiert. Bei positiven Ionen wird im ersten geschlossenen Zustand an der zweiten Elektrode ein geringeres Potential erzeugt als an der dritten Elektrode, und für den zweiten geschlossenen Zustand an der zweiten Elektrode ein höheres Potential als an der ersten Elektrode. Bei negativen Ionen wird die Potentialdifferenz entsprechend umgekehrt erzeugt.

Die Erfindung nutzt vorteilhaft die Tatsache, dass zwischen drei hintereinander angeordneten, insbesondere parallelen Elektroden zwei Zwischenräume zwischen den Elektroden existieren, welche beide zum Schließen des lonentors und damit zum Shuttern der Ionen genutzt werden können. Ein elektrisches Potential an der mittleren (zweiten) Elektrode, welches den Ionendurchgang durch die vordere Kammer des lonentors verhindert, wird im Folgenden auch als zweites schließendes Potential bezeichnet. Für positive Ionen handelt es sich hierbei um ein positiveres Potential als das der ersten Elektrode, für negative Ionen um ein negativeres. Umgekehrt hierzu existiert auch ein erstes schließendes Potential der mittleren Elektrode, welches den Ionendurchgang durch die hintere Kammer verhindert. Für positive Ionen handelt es sich hierbei um ein negativeres Potential als das der dritten Elektrode, für negative Ionen um ein positiveres. Die Elektroden werden hierbei in Flugrichtung der Ionen durchnummeriert. Weiterhin existiert ein Durchlasspotential, welches zwischen den Potentialen der äußeren Elektroden liegt. Üblicherweise, aber nicht notwendigerweise, liegt dieses in der Mitte zwischen ihnen. Durch einen geschickten Wechsel zwischen diesen drei Potentialen ist es möglich, Ionen ohne Diskriminierung zu injizieren. Im Ausgangszustand liegt an der mittleren Elektrode das erste schließende Potential an, sodass die vordere Kammer des lonentors bereits mit Ionen gefüllt ist, da sie diese passieren können. Nun wird das mittlere Gitter auf das Durchlasspotential geschaltet und somit Ionen injiziert. Da Ionen direkt am mittleren Gitter zur Verfügung stehen, erfolgt der Beginn der Injektion ohne Verzögerung oder Diskriminierung. Um die Injektion zu beenden, wird das mittlere Gitter auf das zweite schließende Potential geschaltet. Alle Ionen in der vorderen Kammer werden entladen und es können keine weiteren Ionen das lonentor passieren. Die hintere Kammer verbleibt jedoch durchlässig, sodass alle Ionen, welche das mittlere Gitter zu diesem Zeitpunkt bereits passiert haben, injiziert werden, anstatt wie bei anderen Ionentorprinzipien beim Schließen des lonentors wieder entladen zu werden. Nachdem alle Ionen die hintere Kammer verlassen haben, wird das mittlere Gitter wieder auf das erste schließende Potential zurückgeschaltet und das lonentor befindet sich wieder in seinem Ausgangszustand. Bei diesem Wechsel können keine Ionen das lonentor passieren, da die vordere Kammer aufgrund des zuvor angelegten zweiten schließenden Potentials keine Ionen mehr enthält.

Somit existiert, obwohl das lonentor physikalisch zwei große Eliminationsbereiche aufweist, keine Diskriminierung langsamer Ionenspezies mehr. Dies wird dadurch erreicht, dass der jeweils wirksame Eliminationsbereich durch eine geschickte Beschaltung um das injizierte Ionenpaket herum bewegt wird.

Gemäß der Erfindung ist vorgesehen, dass während eines Schaltzyklus des lonentors zunächst der erste geschlossene Zustand eingenommen wird, danach der geöffnete Zustand und dann der zweite geschlossene Zustand. Dies hat den Vorteil, dass die Diskriminierung langsamer Ionen minimiert wird.

Gemäß einer vorteilhaften Weiterbildung der Erfindung ist vorgesehen, dass nach dem zweiten geschlossenen Zustand wieder der erste geschlossene Zustand angenommen wird. Hierdurch wird ein neuer Schaltzyklus begonnen. Ein Schaltzyklus beginnt somit mit dem ersten geschlossenen Zustand.

Gemäß einer vorteilhaften Weiterbildung der Erfindung ist vorgesehen, dass während eines Schaltzyklus des lonentors nur das Potential an der zweiten Elektrode variiert wird. Die hat den Vorteil, dass das erfindungsgemäße Verfahren schaltungstechnisch einfach realisiert werden kann, da nur das Potential an einer Elektrode variiert werden muss. Die anderen Elektroden können mit festen Potentialen verbunden sein, die vorteilhafterweise so ausgewählt werden können, dass zwischen der ersten und der dritten Elektrode die gleiche Feldstärke erzeugt wird wie in den vor und hinter dem lonentor angrenzenden Bereichen einer Einrichtung, in der das Ionentor vorgesehen ist.

Gemäß einer vorteilhaften Weiterbildung der Erfindung ist vorgesehen, dass in einem, mehreren oder allen Schaltzuständen des lonentors das veränderbare Potential an einer Elektrode des lonentors oder die veränderbaren Potentiale an mehreren Elektroden des lonentors zumindest zeitweise konstant sind. Dies hat den Vorteil, dass die einzelnen Schaltzyklen eindeutig voneinander getrennt werden können und dementsprechend bei der Analyse der durch das lonentor getaktet weitergegebenen Ionen eine Unterscheidung zwischen den Schaltzyklen auf einfache Weise möglich ist.

Gemäß einer vorteilhaften Weiterbildung der Erfindung ist vorgesehen, dass im geöffneten Zustand des lonentors das veränderbare Potential an einer Elektrode des lonentors oder die veränderbaren Potentiale an mehreren Elektroden des lonentors permanent verändert werden. Das veränderbare Potential bzw. die veränderbare Potentiale müssen somit nicht nur quasi rechteckförmig (steilflankig) geschaltet werden und dazwischen konstant gehalten werden. Stattdessen sind auch Übergangsbereiche zulässig, z.B. lineare oder nicht lineare Übergänge zwischen konstant gehaltenen Potentialniveaus. Dies hat den Vorteil, dass die Anforderungen an die erforderlichen Schaltungsbauelemente nicht besonders hoch sein müssen und somit handelsübliche, kostengünstige Schaltungselemente wie Transistoren verwendet werden können. Die bei einem Schaltvorgang auftretenden Transienten können hierdurch sogar vorteilhaft für die Realisierung des erfindungsgemäßen Verfahrens genutzt werden, wie nachfolgend noch anhand von Ausführungsbeispielen näher erläutert wird.

Die eingangs genannte Aufgabe wird ferner gelöst durch eine Einrichtung mit einem Ionentransportbereich und wenigstens einer Felderzeugungseinrichtung zum Bewegen der Ionen in einer vorgesehenen Driftrichtung in dem Ionentransportbereich mittels eines elektrischen Felds, wobei der Ionentransportbereich ein lonentor mit wenigstens einer ersten, einer zweiten und einer dritten Elektrode aufweist, die in der vorgesehenen Driftrichtung der Ionen derart hintereinander angeordnet sind, dass in Driftrichtung die zweite Elektrode hinter der ersten Elektrode und die dritte Elektrode hinter der zweiten Elektrode angeordnet ist, wobei die Einrichtung ferner eine Steuereinrichtung zur Steuerung des lonentors aufweist, die zur Ausführung eines Verfahrens der zuvor beschriebenen Art eingerichtet ist. Auch hierdurch lassen sich die zuvor erwähnten Vorteile realisieren. Die Steuereinrichtung kann z.B. als elektronische Steuereinrichtung ausgebildet sein.

Die erste, zweite und/oder dritte Elektrode kann z.B. als Ringelektrode ausgebildet sein.

Gemäß einer vorteilhaften Weiterbildung der Erfindung ist die erste, die zweite und/oder die dritte Elektrode des lonentors als Gitterelektrode ausgebildet. Dies hat den Vorteil, dass das lonentor mechanisch einfach realisiert werden kann, bei zugleich hoher Effizienz beim Beeinflussen des lonenstroms.

Die erste, zweite und/oder dritte Elektrode des lonentors kann insbesondere nicht als Ringelektrode ausgebildet sein. Dementsprechend befindet sich auch elektrisch leitfähiges Material der jeweiligen Elektrode im Inneren des Ionentransportbereichs.

Ist die erste, die zweite und/oder dritte Elektrode als Gitterelektrode ausgebildet, so weist eine solche Elektrode eine gitterartige leitfähige Struktur auf, wobei der Begriff Gitter oder gitterartig dabei im weitesten Sinne zu verstehen ist und sämtliche Ausführungsformen umfasst, bei denen sich die gitterartige Struktur durch den lonentransportbereich hindurcherstreckt, d.h. durch das Volumen des Ionentransportbereichs, im Unterschied beispielsweise zu einer Ringelektrode, die nur am Außenumfang angeordnet sein kann. Die gitterartige leitfähige Struktur kann insbesondere als planare Struktur ausgebildet sein, d.h. mit einer ebenen leitfähigen gitterartigen Struktur.

Das erfindungsgemäße Verfahren sowie die erfindungsgemäße Einrichtung können ferner dadurch weitergebildet sein, dass das durch die Elektroden des lonentors erzeugte elektrische Feld zwischen benachbarten Elektroden des lonentors über eine senkrecht zur vorgesehenen Driftrichtung der Ionen gedachte Querschnittsfläche des lonentransportbereichs im Wesentlichen homogen ausgebildet ist, d.h. dass die elektrische Feldstärke und/oder die Richtung der Feldlinien über die Querschnittsfläche im Wesentlichen gleichbleibend ist. Hierdurch werden unerwünschte Feldverzerrungen vermieden und ein sicheres Öffnen und Schließen des lonentors über die gesamte Querschnittsfläche gewährleistet. Benachbarte Elektroden des lonentors sind die erste und die zweite Elektrode einerseits und/oder die zweite und die dritte Elektrode andererseits.

Gemäß einer vorteilhaften Weiterbildung der Erfindung ist die Einrichtung als Ionenmobilitätsspektrometer ausgebildet. Auf diese Weise kann eine Gasanalyse mittels des lonenmobilitätsspektrometers durchgeführt werden, wobei auch präzise Analysen von Stoffen durchgeführt werden, bei denen langsame Ionen beteiligt sind.

Die Erfindung kann sowohl bei Unterdruck als auch bei Atmosphären- oder Überdruck genutzt werden. Dementsprechend eignet sich die Erfindung für alle Arten von lonenmobilitätsspektrometern, egal ob sie mit Unterdruck, Atmosphären- oder Überdruck betrieben werden.

Die eingangs genannte Aufgabe wird ferner gelöst durch ein Computerprogramm mit Programmcodemitteln, eingerichtet zur Durchführung eines Verfahrens der zuvor beschriebenen Art, wenn das Verfahren auf einem Rechner ausgeführt wird. Das Verfahren kann z.B. auf einem Rechner der Steuereinrichtung zur Steuerung des lonentors ausgeführt werden.

Die Erfindung wird nachfolgend anhand von Ausführungsbeispielen unter Verwendung von Zeichnungen näher erläutert. Es zeigen
- Figur 1 -: den prinzipiellen Aufbau einer Gasanalyseeinrichtung mit einem lonenmobilitätsspektrometer in schematischer Darstellung und
- Figur 2 -: die Gasanalyseeinrichtung gemäß Figur 1 mit weiteren Komponenten und
- Figur 3 -: verschiedene Ausführungsformen von Elektroden des lonentors und
- Figur 4 -: eine erste Schaltungsanordnung zum Betreiben eines lonentors und
- Figur 5 -: ein Zeitdiagramm des Betriebs des lonentors gemäß Figur 4 und

- Figur 6 -: eine zweite Schaltungsanordnung zum Betreiben eines Ionentors und
- Figur 7 -: ein Zeitdiagramm des Betriebs gemäß Figur 6.

In den Figuren werden gleiche Bezugszeichen für einander entsprechende Elemente verwendet.

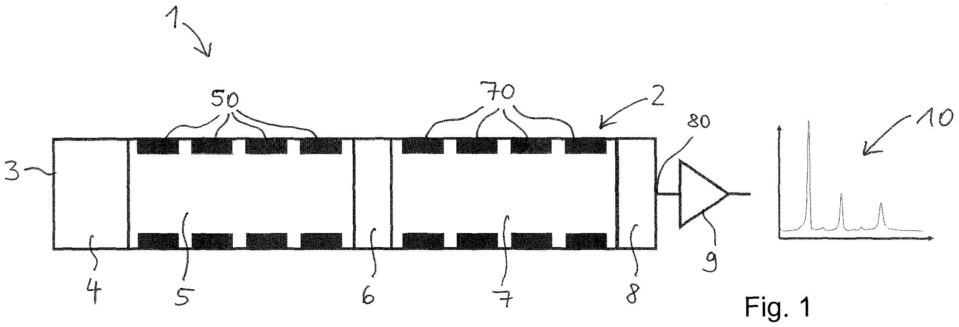

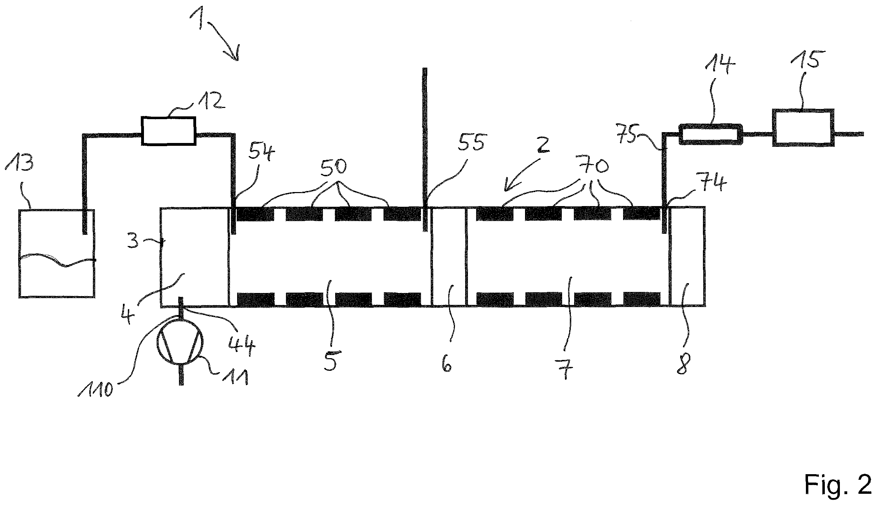

Allgemein sei zunächst darauf hingewiesen, dass die Figur 1 die Gasanalyseeinrichtung bzw. dessen lonenmobilitätsspektrometer hinsichtlich des Aufbaus und der elektrischen Beschaltung zeigt, während die Figur 2 den gleichen Gegenstand hinsichtlich der Anschlüsse der Druckleitungen sowie der Zuführung der Gase und sonstigen Substanzen zeigt. Die beschriebene Gasanalyseeinrichtung kann vorteilhaft eine Kombination aus elektrischer Beschaltung und den in Figur 2 dargestellten Verbindungen aufweisen, was jedoch der besseren Übersicht halber nicht kombiniert wiedergegeben ist.

Die in der Figur 1 dargestellte Gasanalyseeinrichtung 1 weist ein lonenmobilitätsspektrometer 2 auf, das einen z.B. röhren- oder tubusförmigen Gehäusekorpus 3 hat. Der Gehäusekorpus 3 unterteilt sich in einen lonisationsquellen-Bereich 4, eine Reaktionskammer 5, ein lonentor 6, eine Driftkammer 7 sowie einen Ionendetektor 8, die wie in Figur 1 dargestellt in der zuvor genannten Reihenfolge hintereinander angeordnet sind. Der Ionendetektor 8, der z.B. als Faraday-Detektor ausgebildet sein kann, z.B. in Becherform oder in Form einer Metallplatte, ist mit einer an einem elektrischen Anschluss 80 des lonenmobilitätsspektrometers 2 angeschlossenen Verstärker 9 verbunden. Durch den Verstärker 9 wird der über den Anschluss 80 zugeführte, durch die Ladungen der Ionen erzeugte elektrische Strom verstärkt, sodass sich am Ausgang des Verstärkers 9 ein Spektrogramm 10 ergibt. Die Figur 1 zeigt ferner, dass in der Reaktionskammer 5 und in der Driftkammer 7 Elektroden 50, 70 einer ersten bzw. zweiten Felderzeugungseinrichtung angeordnet sind. Die Elektroden 50, 70 sind im dargestellten Ausführungsbeispiel als Ringelektroden ausgebildet, die einen Ring im Inneren der Reaktionskammer 5 bzw. der Driftkammer 7 bilden.

Es sind z.B. folgende Ausführungsformen des lonisationsquellen-Bereichs 4 der Gasanalyseeinrichtung 1 vorteilhaft:
a) Eine Ionisation mit Hilfe einer Koronaentladung in Point-to-plane Geometrie. Hierbei ist einer Koronanadel, die an der linken Stirnseite des Gehäusekorpus 3 in den lonisationsquellen-Bereich 4 eingeführt ist, über eine elektrische Leitung mit einer Spannungsquelle verbunden, die eine Koronaspannung zur Verfügung stellt. Die Spannungsquelle ist mit ihrem anderen Anschluss mit einer Gitterelektrode elektrisch verbunden, die im Inneren des Gehäusekorpus 3 im lonisationsquellen-Bereich 4 angeordnet ist. Zwischen der Koronanadel und der Gitterelektrode wird eine Koronaentladung erzeugt, die zu einer Ionisation der dort vorhandenen Gasmoleküle führt.
b) In einer anderen Ausführungsform des lonisationsquellen-Bereichs 4 ist keine Gitterelektrode vorgesehen. Stattdessen ist die Spannungsquelle mit der dem lonisationsquellen-Bereich 4 nächstgelegenen Ringelektrode 50 der Reaktionskammer 5 sowie mit der Koronanadel verbunden. Auf diese Weise lässt sich eine Ionisation mit Hilfe einer Koronaentladung in Point-to-ring Geometrie erreichen.
c) In einer anderen Ausführungsform des lonisationsquellen-Bereichs 4 ist im Ionisationsquellen-Bereich 4 ein Elektronenemitter angeordnet, mit dem ebenfalls eine Ionisation des Gases durchgeführt werden kann.

Die Ionisationsquelle der Gasanalyseeinrichtung 1 kann kontinuierlich oder gepulst betrieben werden.

Die Figur 2 zeigt verschiedene über Hohlleitungen mit dem Gehäusekorpus 3 des lonenmobilitätsspektrometers 2 verbundene weitere Bauteile der Gasanalyseeinrichtung 1. Ein Absauganschluss 44, der an dem Gehäusekorpus 3 im lonisationsquellen-Bereich 4 angeordnet ist, aber auch z.B. im Bereich der Reaktionskammer 5 angeordnet sein kann, ist mit einem Sauganschluss 110 einer Unterdruckerzeugungseinrichtung 11 verbunden, z.B. einer Pumpe. Allerdings kann die Erfindung sowohl bei Unterdruck als auch bei Atmosphären- oder Überdruck genutzt werden.

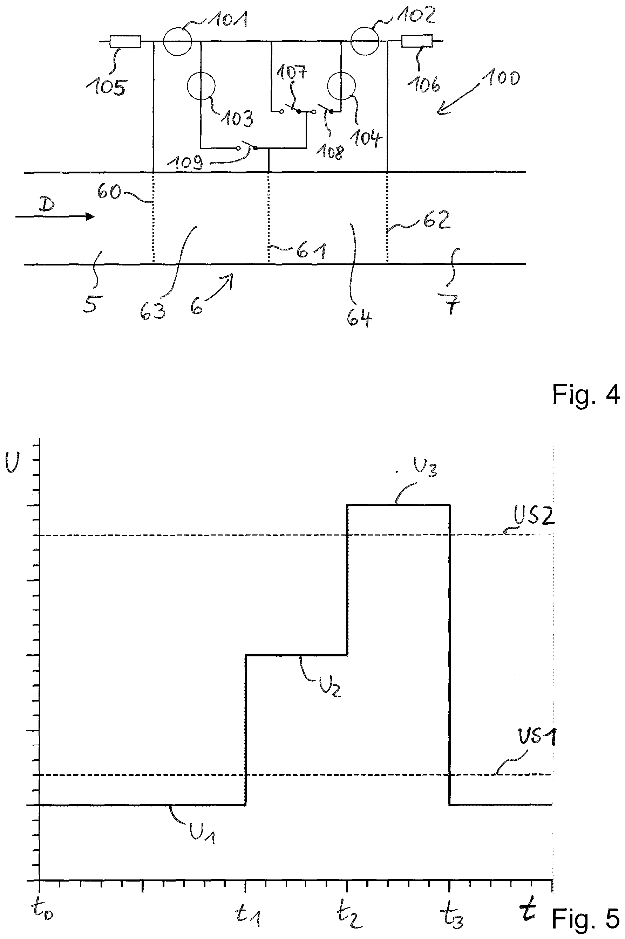

Die für die Ionisation im Ionisationsquellen-Bereich 4 erforderlichen Wassermoleküle können z.B. durch Luftfeuchtigkeit von in die Gasanalyseeinrichtung eingebrachter Umgebungsluft stammen. Insbesondere im Fall relativ trockener Luft kann über einen Wasserzufuhranschluss 54 von einem Wassertank 13 zusätzliches Wasser in den Gehäusekorpus 3 geleitet werden, z.B. direkt in die Reaktionskammer 5. Die Zufuhr des Wassers, z.B. in Form von Wasserdampf, kann über eine mit dem Wasserzufuhranschluss 54 verbundene Hohlleitung direkt von dem Wassertank 13 erfolgen, oder, wie in der Figur 5 dargestellt, über einen dazwischen geschalteten Massenflussregler 12. Durch den Massenflussregler 12 kann die Wasserzufuhr definiert eingestellt und konstant gehalten werden.

Der Gehäusekorpus 3 weist ferner einen Analyten-Einlassanschluss 55 zum Zuführen des Analyten, d.h. des zu analysierenden Probengases aus der Umgebung, auf. Der Analyten-Einlassanschluss 55 kann z.B. in die Reaktionskammer 5 münden, insbesondere an dem lonentor 6 zugewandten Ende der Reaktionskammer 5.

Der Gehäusekorpus 3 weist ferner einen Driftgas-Zufuhranschluss 74 auf, der über eine Hohlleitung mit einem Driftgasvorrat verbunden ist. Als Driftgas können grundsätzlich diverse sich mit den Analyt-Ionen chemisch/physikalisch neutral verhaltende Gase verwendet werden, wie z.B. Stickstoff oder ein Edelgas. Infolge des relativ hohen Stickstoffgehalts der Umgebungsluft kann diese auch direkt als Driftgas verwendet werden, sodass in der Figur 5 lediglich eine Verbindung zur Umgebungsluft dargestellt ist. Dem Driftgas-Zufuhranschluss 74 kann ein Massenflussregler 15 vorgeschaltet sein, wodurch die Zufuhr des Driftgases geregelt und konstant gehalten werden kann. Dem Driftgas-Zufuhranschluss 74 kann ferner ein Filter 14 vorgeschaltet sein, was insbesondere bei Verwendung von Umgebungsluft als Driftgas vorteilhaft ist, um dieses zu reinigen.

Der lonisationsquellen-Bereich 4, die Reaktionskammer 5, der Bereich des Ionentors 6 und die Driftkammer 7 können untereinander druckverbunden sein, d.h. es erfolgt ein Druckausgleich zwischen diesen Abschnitten des Gehäusekorpus 3. So kann durch die Unterdruckerzeugungseinrichtung 11 der gewünschte Unterdruck erzeugt werden und dabei zugleich Probengas durch den Analyten-Einlassanschluss 55 und Driftgas durch den Driftgas-Zufuhranschluss 74 angesaugt werden. Sämtliche angesaugten Gase werden über die Unterdruckerzeugungseinrichtung 11 dann abgesaugt und wieder abgeführt.

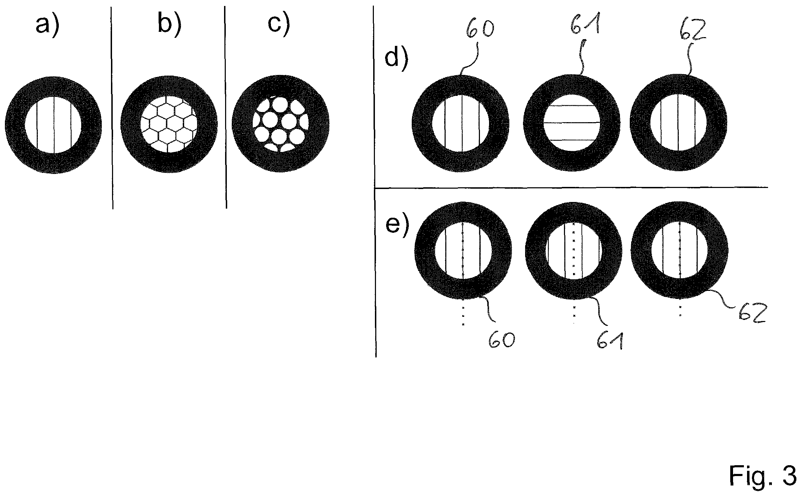

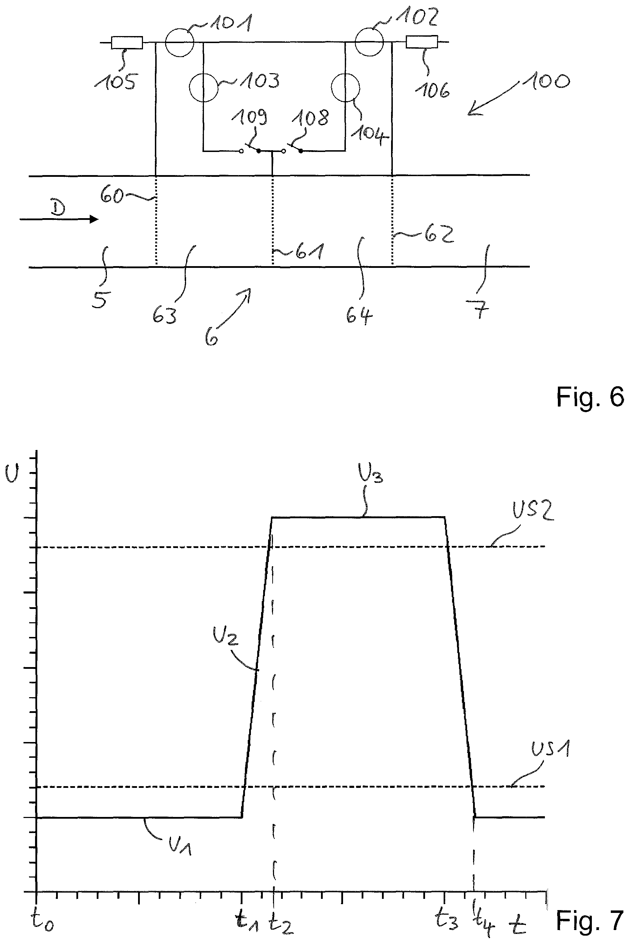

Die Figur 3 zeigt in den Ansichten a), b) und c) verschiedene Elektrodenformen von Gitterelektroden, wie sie als in den Figuren 4 und 6 dargestellte Elektroden 60, 61, 62 des lonentors 6 verwendet werden können. Gemäß Ausführungsform a) weist die Elektrode streifenförmige Leiter auf, die sich vertikal, horizontal oder diagonal erstrecken können. Gemäß Ausführungsform b) weist die Elektrode eine hexagonale Struktur der Leiter auf. Gemäß Ausführungsform c) weist die Elektrode eine Leiteranordnung mit kreisförmigen Ausschnitten auf. Rechteckige Öffnungen sind auch eine vorteilhafte Ausführungsform.

Die Ansicht d) zeigt die drei bereits erwähnten Elektroden 60, 61, 62 nebeneinander. Erkennbar ist, dass die Elektroden hintereinander in unterschiedlicher Orientierung der streifenförmigen Leiter angeordnet sein können, um die Wirksamkeit des lonentors zu erhöhen.

Die Ansicht e) zeigt die drei bereits erwähnten Elektroden 60, 61, 62 nebeneinander. Erkennbar ist, dass die Elektroden 60, 61, 62 auch zueinander versetzt angeordnete streifenförmige Leiter aufweisen können, wie durch die mit punktierter Linie dargestellte Symmetrieachse verdeutlicht wird. In einer vorteilhaften Ausführungsform können die Löcher der hexagonalen oder kreisförmigen Anordnungen gegeneinander versetzt sein, um die Wirksamkeit zu erhöhen.

Die in Figur 3 wiedergegebenen Ansichten zeigen die Elektroden in einer Blickrichtung, die der in den Figuren 4 und 6 dargestellten Driftrichtung der Ionen entspricht.

In den Figuren 4 und 6 ist jeweils derjenige Teil des lonenmobilitätsspektrometers vergrößert dargestellt, in dem das Ionentor 6 angeordnet ist. Teilweise sind ferner die Reaktionskammer 5 und die Driftkammer 7 erkennbar. Die Anordnung aus der Reaktionskammer 5, dem mit dem lonentor 6 versehenden Abschnitt sowie den darauffolgenden, die Driftkammer 7 aufweisenden Abschnitt wird auch als Ionentransportbereich der Einrichtung bezeichnet. Die Ionen bewegen sich mit einer vorgesehenen Driftrichtung D durch den Ionentransportbereich bzw. sie werden zeitweise durch das lonentor 6 daran gehindert.

Das lonentor 6 weist drei in Driftrichtung D hintereinander angeordnete Elektroden auf, nämlich in Driftrichtung gesehen zunächst eine erste Elektrode 60, dahinter eine zweite Elektrode 61 und dahinter eine dritte Elektrode 62. Die Elektroden 60, 61, 62 sind mit einer elektronischen Steuereinrichtung 100 elektrisch verbunden. Über die Steuereinrichtung 100 erfolgt die elektrische Steuerung der Elektroden des lonentors im Sinne des erfindungsgemäßen Verfahrens. Hierfür weist die Steuereinrichtung 100 einen Rechner auf, z.B. in Form eines Mikroprozessors oder Mikrocontrollers.

Durch die drei Elektroden 60, 61, 62 werden zwei Kammern 63, 64 des lonentors 6 gebildet. Wegen der gewählten Darstellung und der hier beispielhaft vorgesehenen Driftrichtung D wird die Kammer 63 auch als vordere Kammer bezeichnet, die Kammer 64 auch als hintere Kammer. Durch entsprechende Ansteuerung der Elektroden 60, 61, 62 mit unterschiedlichen Potentialen kann das lonentor 6 in zwei verschiedenen geschlossenen Zuständen betrieben werden, nämlich in einem ersten geschlossenen Zustand, in dem die hintere Kammer 64 gesperrt ist, und einem zweiten geschlossenem Zustand, in dem die vordere Kammer 63 gesperrt ist. "Gesperrt" bedeutet in diesem Zusammenhang, dass der lonenstrom nicht in der Driftrichtung D das lonentor 6 bzw. die gesperrte Kammer passieren kann. Die Ionen werden vielmehr in der jeweiligen Kammer absorbiert.

Die Schaltungsanordnung der Steuereinrichtung 100 zur elektrischen Versorgung der Elektroden 60, 61, 62 kann, wie dargestellt, durch eine Reihenschaltung aus zwei Spannungsquellen 101, 102 sowie Widerständen 105, 106 gebildet sein. Hierbei ist die erste Elektrode 60 mit einem Verbindungspunkt zwischen dem Widerstand 105 und der Spannungsquelle 101 verbunden. Die dritte Elektrode 62 ist mit einem Verbindungspunkt der Spannungsquelle 102 und dem Widerstand 106 verbunden. Dementsprechend sind die erste und die dritte Elektrode 60, 62 mit einem konstanten elektrischen Potential verbunden. Lediglich die mittlere, zweite Elektrode 61 ist hinsichtlich ihres Potentials umschaltbar. Hierfür ist die dargestellte Anordnung aus zwei Spannungsquellen 103, 104 sowie Schaltern 107, 108, 109 vorgesehen. Über den Schalter 107 kann die zweite Elektrode 61 mit einem mittleren Potential, das durch den Verbindungspunkt zwischen den Spannungsquellen 101, 102 definiert ist, verbunden werden. Durch Schließen des Schalters 108 kann die zweite Elektrode 61 auf ein erstes höheres Potential gelegt werden, das durch die Spannungsquelle 104 definiert ist. Dieses kann je nach Ionenpolarität auch geringer sein, beispielsweise U₁ in Figur 5. Durch Schließen des Schalters 109 kann die zweite Elektrode auf ein drittes, noch höheres Potential (oder bei anderer Ionenpolarität noch geringeres) gelegt werden, das durch die Spannungsquelle 103 definiert ist. Dementsprechend wird immer nur einer der Schalter 107, 108, 109 geschlossen. Das Umschalten zwischen dem Öffnen und dem Schließen der Schalter erfolgt derart synchronisiert, dass die zweite Elektrode 61 praktisch unterbrechungsfrei mit einem der drei genannten Potentiale verbunden ist.

Die Figur 5 zeigt beispielhaft einen Schaltzyklus des lonentors mit den drei bereits erwähnten Zuständen, nämlich dem geöffneten und zwei unterschiedlichen geschlossenen Zuständen. Hierbei ist das an der zweiten Elektrode 61 anliegende Potential U über die Zeit dargestellt. Der Schaltzyklus beginnt zu einem Zeitpunkt t₀. Zu diesem Zeitpunkt bis zu einem Zeitpunkt t₁ ist ein Potential U₁ angelegt, das wie erkennbar relativ niedrig ist und insbesondere unterhalb einer unteren Schwelle US1 liegt. In Kombination mit den an der ersten Elektrode 60 und der dritten Elektrode 62 angelegten Potentialen ergibt sich eine Potentialdifferenz zwischen der zweiten und der dritten Elektrode, durch die das lonentor in der hinteren Kammer 64 gesperrt ist, d.h. der lonenstrom kann noch die vordere Kammer 63 durchqueren, aber nicht mehr die hintere Kammer 64. Bezüglich der Potentialdifferenz zwischen der ersten Elektrode 60 und der zweiten Elektrode 61 ergibt sich in diesem Zustand keine solche Sperrwirkung.

Zum Zeitpunkt t₁ wird das lonentor 6 in den geöffneten Zustand umgeschaltet, indem das Potential an der zweiten Elektrode 61 auf einen Wert oberhalb der unteren Schwelle US1 angehoben wird, nämlich auf das dort dargestellte Potential U₂. Das Potential U₂ kann dabei in der Mitte zwischen dem unteren Schwellenwert US1 und einem oberen Schwellenwert US2 gelegt werden, was aber nicht zwingend ist. Entscheidend ist, dass ein solches Potential eingestellt wird, dass das lonentor hinsichtlich sämtlicher Elektroden in einem geöffneten Zustand übergeht und die Ionen das lonentor passieren können.

Zum Zeitpunkt t₂ wird das lonentor in den zweiten geschlossenen Zustand überführt, indem das Potential an der zweiten Elektrode 61 auf einen Wert oberhalb eines oberen Schwellenwerts US2 angehoben wird, hier beispielhaft durch ein Potential U₃ dargestellt. Nun ist die vordere Kammer 63 gesperrt, die hintere Kammer 64 ist geöffnet. Hierdurch ist das lonentor im zweiten geschlossenen Zustand.

Zu einem Zeitpunkt t₃ wird das Potential an der zweiten Elektrode 61 wieder auf einen Wert unterhalb des unteren Schwellenwert US1 abgesenkt, wodurch das lonentor von dem zweiten geschlossenen Zustand in den ersten geschlossenen Zustand umgeschaltet wird, d.h. die vordere Kammer 63 erzeugt keine Sperrwirkung für die Ionen, aber die hintere Kammer 64. Nun beginnt ein neuer Schaltzyklus des Ionentors, der wie zuvor beschrieben ablaufen kann.

Die in den Figuren 4 und 6 beispielhaft wiedergegebenen Spannungsquellen und/oder Schalter können auch durch andere Bauteile realisiert werden, wie z.B. gesteuerte Transformatoren, die z.B. mit stetig steigendem Strom beaufschlagt werden können, um ausgangsseitig bestimmte zumindest ungefähr konstante Potentiale zu erzeugen. Die dargestellten Schalter 107, 108, 109 können als mechanische Schalter, z.B. Relais oder Schütze, ausgebildet sein, oder vorteilhaft als Halbleiterschalter, z.B. in Form von Transistoren, wie z.B. IGBT's oder sonstige Feldeffekttransistoren.

Die Figur 6 zeigt eine bis auf die nachfolgend erläuterten Unterschiede vergleichbare Schaltungsanordnung wie die Figur 4. Gegenüber der Figur 4 fehlt der den Schalter 107 aufweisende Leitungszweig, mit dem die zweite Elektrode 61 direkt mit dem Potential zwischen den Spannungsquellen 101, 102 verbindbar ist. Es verbleiben somit nur die Schalter 108, 109. Um dennoch ein mittleres Potential zwischen den Schwellwerten US1, US2 an der zweiten Elektrode 61 erzeugen zu können, wird gezielt ein transienter Verlauf zwischen dem unteren Potential U₁ und dem oberen Potential U₃ ausgenutzt, das mit einer gewissen Anstiegszeit verbunden ist. Es kann z.B. bei Verwendung handelsüblicher Halbleiterschalter für die Schalter 108, 109 die bei einer derartigen Schaltungsanordnung ohnehin auftretende Anstiegszeit bzw. Abfallzeit zwischen den Potentialen U₁ und U₃ genutzt werden. Diese ergibt sich aus der begrenzten Leitfähigkeit der Halbleiterschalter in Kombination mit ohnehin vorhandenen Kapazitäten in der Schaltungsanordnung, wie z.B. parasitäre Kapazitäten der Zuleitungskabel. Gegebenenfalls kann dieser Effekt noch durch Hinzuschaltung eines oder mehrerer Widerstände und/oder Kondensatoren auf ein gewünschtes Maß der Anstiegszeit bzw. der Abfallzeit adaptiert werden.

Wie in dem zur Schaltungsanordnung gemäß Figur 6 gehörenden Zeitdiagramm in Figur 7 dargestellt, ergibt sich beim Umschalten zwischen den Schaltern 108, 109 ein beispielsweise rampenförmiger Verlauf des Potentials U zwischen den Zeitpunkten t₁ und t₂ bzw. t₃ und t₄ Zum Zeitpunkt t₁ wird z.B. der Schalter 108 geschlossen und zugleich der Schalter 109 geöffnet. Es erfolgt der Anstieg des Potentials bis zum Zeitpunkt t₂. Zum Zeitpunkt t₃ wird der Schalter 109 geschlossen und der Schalter 108 geöffnet. Es erfolgt bis zum Zeitpunkt t₄ ein Abfall des Potentials an der zweiten Elektrode 61.

Wie erkennbar ist, werden auch bei diesem Schaltzyklus in der genannten Reihenfolge die Zustände erster geschlossener Zustand, geöffneter Zustand und zweiter geschlossener Zustand durchlaufen. Das lonentor ist geöffnet, solange sich das Potential an der zweiten Elektrode 61 in dem Bereich zwischen der unteren Schwelle US1 und der oberen Schwelle US2 befindet.

Wie erkennbar ist, kann die Schaltungsanordnung gemäß Figur 6 auch mit einem einzigen Schalter realisiert werden, indem ein Umschalter eingesetzt wird. Bei der Ausführungsform gemäß Figur 4 kann statt der drei einzelnen Schalter z.B. ein Dreifach-Umschalter eingesetzt werden.

## Patentansprüche

1. Verfahren zum Betreiben eines lonentors (6) mit wenigstens einer ersten, einer zweiten und einer dritten Elektrode (60, 61, 62), die in einer vorgesehenen Driftrichtung (D) von durch das lonentor (6) zu beeinflussenden Ionen derart hintereinander angeordnet sind, dass in Driftrichtung (D) die zweite Elektrode (61) hinter der ersten Elektrode (60) und die dritte Elektrode (62) hinter der zweiten Elektrode (61) angeordnet ist, wobei durch Anlegen zeitlich wechselnder Potentiale (U) an einer oder mehreren der vorgenannten Elektroden (60, 61, 62) das lonentor (6) zwischen einem geschlossenen Zustand, in dem Ionen in der vorgesehenen Driftrichtung (D) nicht durch das lonentor (6) driften können, und einem geöffneten Zustand, in dem Ionen (6) in der vorgesehenen Driftrichtung (D) durch das lonentor (6) driften können, umgeschaltet wird, wobei in einem Schaltzyklus des Ionentors (6), der den geöffneten und den geschlossenen Zustand des Ionentors (6) umfasst, zwei unterschiedliche geschlossene Zustände des Ionentors (6) erzeugt werden, **dadurch gekennzeichnet, dass**
- Ionen verschiedener Ionenspezies analysiert werden, wobei die Ionenspezies langsame und schnelle Ionenspezies umfassen,
- zunächst in einem ersten geschlossenen Zustand durch Anlegen einer ersten Potentialdifferenz (U1) zwischen der zweiten und der dritten Elektrode (61, 62) das lonentor (6) geschlossen wird, mindestens solange bis der Bereich zwischen der ersten und der zweiten Elektrode (60, 61) mit Ionen aller Ionenspezies soweit gefüllt ist, sodass diese Ionenspezies direkt an der zweiten Elektrode (61) zur Verfügung stehen,
- danach der offene Zustand für eine vorbestimmte Zeit eingenommen wird und
- danach in einem zweiten geschlossenen Zustand durch Anlegen einer zweiten Potentialdifferenz (U3) zwischen der ersten und der zweiten Elektrode (60, 61) das lonentor (6) geschlossen wird, mindestens solange bis alle Ionen aller Ionenspezies zwischen der zweiten und der dritten Elektrode (61, 62) in eine dem lonentor (6) nachgeordnete Driftklammer (7) injiziert wurden,
- sodass keine Diskriminierung langsamer Ionenspezies bei der Analyse erfolgt.

2. Verfahren nach Anspruch 1, **dadurch gekennzeichnet, dass** nach dem zweiten geschlossenen Zustand wieder der erste geschlossene Zustand angenommen wird.

3. Verfahren nach einem der vorhergehenden Ansprüche, **dadurch gekennzeichnet, dass** während eines Schaltzyklus des lonentors (6) nur das Potential (U) an der zweiten Elektrode (61) variiert wird.

4. Verfahren nach einem der vorhergehenden Ansprüche, **dadurch gekennzeichnet, dass** in einem, mehreren oder allen Schaltzuständen des lonentors (6) das veränderbare Potential (U) an einer Elektrode (60, 61, 62) des lonentors (6) oder die veränderbaren Potentiale (U) an mehreren Elektroden (60, 61, 62) des lonentors (6) zumindest zeitweise konstant sind.

5. Verfahren nach einem der vorhergehenden Ansprüche, **dadurch gekennzeichnet, dass** im geöffneten Zustand des lonentors (6) das veränderbare Potential (U) an einer Elektrode (60, 61, 62) des lonentors (6) oder die veränderbaren Potentiale (U) an mehreren Elektroden (60, 61, 62) des lonentors (6) permanent verändert werden.

6. Einrichtung (1) mit einem Ionentransportbereich (5, 6, 7) und wenigstens einer Felderzeugungseinrichtung (50, 70) zum Bewegen der Ionen in einer vorgesehenen Driftrichtung (D) in dem Ionentransportbereich (5, 6, 7) mittels eines elektrischen Felds, wobei der Ionentransportbereich (5, 6, 7) ein lonentor (6) mit wenigstens einer ersten, einer zweiten und einer dritten Elektrode (60, 61, 62) aufweist, die in der vorgesehenen Driftrichtung (D) der Ionen derart hintereinander angeordnet sind, dass in Driftrichtung (D) die zweite Elektrode (61) hinter der ersten Elektrode (60) und die dritte Elektrode (62) hinter der zweiten Elektrode (61) angeordnet ist, wobei die Einrichtung (1) ferner eine Steuereinrichtung (100) zur Steuerung des Ionentors (6) aufweist, die zur Ausführung eines Verfahrens nach einem der vorhergehenden Ansprüche eingerichtet ist.

7. Einrichtung nach dem vorhergehenden Anspruch, **dadurch gekennzeichnet, dass** die erste, die zweite und/oder die dritte Elektrode (60, 61, 62) des Ionentors (6) als Gitterelektrode ausgebildet ist.

8. Einrichtung nach Anspruch 6 oder 7, **dadurch gekennzeichnet, dass** die Einrichtung als lonenmobilitätsspektrometer ausgebildet ist.

9. Computerprogramm mit Programmcodemitteln, eingerichtet zur Durchführung eines Verfahrens nach einem der Ansprüche 1 bis 5, wenn das Verfahren auf einem Rechner einer Einrichtung (1) nach einem der Ansprüche 6 bis 8 ausgeführt wird.

## Claims

1. Method for operating an ion gate (6) having at least a first, a second and a third electrode (60, 61, 62), which are arranged one behind the other in an intended drift direction (D) of ions to be influenced by the ion gate (6) in such a way that, in the drift direction (D), the second electrode (61) is arranged behind the first electrode (60) and the third electrode (62) is arranged behind the second electrode (61), wherein, by applying time-varying potentials (U) to one or more of the aforementioned electrodes (60, 61, 62), the ion gate (6) is switched between a closed state, in which ions cannot drift through the ion gate (6) in the intended drift direction (D), and an open state, in which ions (6) can drift through the ion gate (6) in the intended drift direction (D), wherein in a switching cycle of the ion gate (6), which comprises the open and the closed state of the ion gate (6), two different closed states of the ion gate (6) are generated, **characterized in that**
- ions of different ion species are analyzed, where the ion species include slow and fast ion species,
- the ion gate (6) is initially closed in a first closed state by applying a first potential difference (U1) between the second and the third electrode (61, 62), at least until the region between the first and the second electrode (60, 61) is filled with ions of all ion species to such an extent that these ion species are directly available at the second electrode (61),
- then the **open** state is taken for a predetermined time, and
- thereafter, in a second closed state, the ion gate (6) is closed by applying a second potential difference (U3) between the first and second electrode (60, 61), at least until all ions of all ion species between the second and third electrode (61, 62) have been injected into a drift chamber (7) downstream of the ion gate (6),
- so that there is no discrimination of slow ion species in the analysis.

2. Method according to claim 1, **characterized in that** after the second closed state the first closed state is assumed again.

3. Method according to one of the preceding claims, **characterized in that** only the potential (U) at the second electrode (61) is varied during a switching cycle of the ion gate (6).

4. Method according to one of the preceding claims, **characterized in that** in one, several or all switching states of the ion gate (6) the variable potential (U) at one electrode (60, 61, 62) of the ion gate (6) or the variable potentials (U) at several electrodes (60, 61, 62) of the ion gate (6) are at least temporarily constant.

5. Method according to any one of the preceding claims, **characterized in that**, in the open state of the ion gate (6), the variable potential (U) at one electrode (60, 61, 62) of the ion gate (6) or the variable potentials (U) at a plurality of electrodes (60, 61, 62) of the ion gate (6) are permanently changed.

6. Device (1) having an ion transport region (5, 6, 7) and at least one field generation device (50, 70) for moving the ions in an intended drift direction (D) in the ion transport region (5, 6, 7) by means of an electric field, the ion transport region (5, 6, 7) having an ion gate (6) with at least a first, a second and a third electrode (60, 61, 62), which are arranged one behind the other in the intended drift direction (D) of the ions in such a way that, in the drift direction (D), the second electrode (61) is arranged behind the first electrode (60) and the third electrode (62) is arranged behind the second electrode (61), the device (1) further having a control device (100) for controlling the ion gate (6), which control device (100) is set up to carry out a method according to one of the preceding claims.

7. Device according to the preceding claim, **characterized in that** the first, the second and/or the third electrode (60, 61, 62) of the ion gate (6) is designed as a grid electrode.

8. Device according to claim 6 or 7, **characterized in that** the device is designed as an ion mobility spectrometer.

9. A computer program comprising program code means arranged to perform a method according to any one of claims 1 to 5, when the method is executed on a computer of a device (1) according to any one of claims 6 to 8.

## Revendications

1. Procédé pour faire fonctionner une porte ionique (6) comportant au moins une première, une deuxième et une troisième électrode (60, 61, 62) qui sont disposées les unes derrière les autres dans une direction de dérive prévue (D) des ions à influencer par la porte ionique (6) de telle sorte que, dans la direction de dérive (D), la deuxième électrode (61) est disposée derrière la première électrode (60) et la troisième électrode (62) est disposée derrière la deuxième électrode (61),
dans lequel, en appliquant des potentiels (U) variant dans le temps à une ou à plusieurs desdites électrodes (60, 61, 62), la porte ionique (6) peut être commutée entre un état fermé dans lequel les ions ne peuvent pas dériver à travers la porte ionique (6) dans la direction de dérive prévue (D), et un état ouvert dans lequel des ions (6) peuvent dériver à travers la porte ionique (6) dans la direction de dérive prévue (D), et
deux états fermés différents de la porte ionique (6) sont produits dans un cycle de commutation de la porte ionique (6), ledit cycle comprenant l'état ouvert et l'état fermé de la porte ionique (6), **caractérisé en ce que**
- on analyse des ions de différentes espèces d'ions, les espèces d'ions comprenant des espèces d'ions lentes et rapides,
- tout d'abord, dans un premier état fermé, on ferme la porte ionique (6) en appliquant une première différence de potentiel (U1) entre la deuxième et la troisième électrode (61, 62), au moins jusqu'à ce que la zone entre la première et la deuxième électrode (60, 61) soit remplie d'ions de toutes espèces d'ions de manière à ce que lesdites espèces d'ions soient disponibles directement à la deuxième électrode (61),
- puis, l'état ouvert est pris pendant une durée prédéterminée, et
- ensuite, dans un deuxième état fermé, on ferme la porte ionique (6) en appliquant une deuxième différence de potentiel (U3) entre la première et la deuxième électrode (60, 61), au moins jusqu'à ce que tous les ions de toutes les espèces d'ions entre la deuxième et la troisième électrode (61, 62) aient été injectés dans une chambre de dérive (7) disposée en aval de la porte ionique (6),
- de sorte que lors de l'analyse, il n'y ait pas de discrimination d'espèces d'ions lentes.

2. Procédé selon la revendication 1,
**caractérisé en ce qu'**après le deuxième état fermé, le premier état fermé est repris.

3. Procédé selon l'une des revendications précédentes,
**caractérisé en ce que** pendant un cycle de commutation de la porte ionique (6), seul le potentiel (U) à la deuxième électrode (61) est modifié.

4. Procédé selon l'une des revendications précédentes,
**caractérisé en ce que** dans un, dans plusieurs ou dans tous les états de commutation de la porte ionique (6), le potentiel variable (U) à une électrode (60, 61, 62) de la porte ionique (6) ou les potentiels variables (U) à plusieurs électrodes (60, 61, 62) de la porte ionique (6) sont au moins temporairement constants.

5. Procédé selon l'une des revendications précédentes,
**caractérisé en ce que**, à l'état ouvert de la porte ionique (6), le potentiel variable (U) à une électrode (60, 61, 62) de la porte ionique (6) ou les potentiels variables (U) à plusieurs électrodes (60, 61, 62) de la porte ionique (6) sont modifiés en permanence.

6. Dispositif (1) comportant une zone de transport d'ions (5, 6, 7) et au moins un dispositif de génération de champ (50, 70) pour déplacer les ions dans une direction de dérive prévue (D) dans la zone de transport d'ions (5, 6, 7) au moyen d'un champ électrique, la zone de transport d'ions (5, 6, 7) présentant une porte ionique (6) ayant au moins une première, une deuxième et une troisième électrode (60, 61, 62), qui sont disposées les unes derrière les autres dans la direction de dérive prévue (D) des ions de telle sorte que, dans la direction de dérive (D), la deuxième électrode (61) est disposée derrière la première électrode (60) et la troisième électrode (62) est disposée derrière la deuxième électrode (61), le dispositif (1) comportant en outre un dispositif de commande (100) destiné à commander la porte ionique (6) et conçu pour mettre en œuvre un procédé selon l'une des revendications précédentes.

7. Dispositif selon la revendication précédente,
**caractérisé en ce que** la première, la deuxième et/ou la troisième électrode (60, 61, 62) de la porte ionique (6) est réalisée sous forme d'électrode de grille.

8. Dispositif selon la revendication 6 ou 7,
**caractérisé en ce que** le dispositif est réalisé sous forme de spectromètre de mobilité ionique.

9. Programme d'ordinateur comprenant des moyens de code de programme conçus pour mettre en œuvre un procédé selon l'une des revendications 1 à 5, lorsque le procédé est exécuté sur un ordinateur d'un dispositif (1) selon l'une des revendications 6 à 8.
